# EUROPEAN PATENT APPLICATION

(11) **EP 4 683 332 A1**
(43) Date of publication of application: **21.01.2026**
(21) Application number: 24774030.1
(22) Date of filing: 15.03.2024
(51) Int. Cl.: H04N 21/4402

(54) **MEDIA CONTENT GENERATION METHOD AND APPARATUS, DEVICE, READABLE STORAGE MEDIUM, AND PRODUCT**

(30) Priority: 17.03.2023 CN 202310266157
(71) Applicant: Beijing Zitiao Network Technology Co., Ltd., Beijing 100190 (CN)
(72) Inventor: SONG, Wen, Beijing 100028 (CN); XU, Mengrong, Beijing 100028 (CN)
(74) Representative: Isarpatent
(86) International application number: PCT/CN2024/081944
(87) International publication number: WO 2024/193465

(57) **Abstract**

The embodiment of the disclosure provides a media content generation method and an apparatus, a device, a readable storage medium and a product, the method includes: displaying an information presentation page associated with a target theme content; acquiring a review content generated based on the target theme content in response to a preset operation triggered by the first user in the information presentation page; generating a first media content based on the review content and the target theme content in response to a sharing operation triggered by the first user; and posting the first media content.

## Description

### CROSS REFERENCE TO RELATED APPLICATIONS

The present application is based on and claims priority from CN Patent Application No. 202310266157.8 filed on March 17, 2023, the disclosure of which is incorporated by reference herein in its entirety.

### TECHNICAL FIELD

The present disclosure relates to the field of interface interaction technologies, and in particular, to a media content generation method and an apparatus, a device, a readable storage medium and a product.

### BACKGROUND

When the user browses the theme content on the internet, review information may be generated according to the theme content. For example, when a user reads a book, the user may score the book and post the book review for viewing by other users. However, the current interaction mode of the review operation based on the theme content is often single.

### SUMMARY

The embodiment of the disclosure provides a media content generation method and an apparatus, a device, a readable storage medium and a product, which are used for solving the technical problem that the existing review operation based on the them content is single in interaction mode.

In a first aspect, embodiments of the present disclosure provide a media content generation method applied to a client of a first user, the method includes:
displaying an information presentation page associated with a target theme content;
acquiring a review content generated based on the target theme content in response to a preset operation triggered by the first user in the information presentation page;
generating a first media content based on the review content and the target theme content in response to a sharing operation triggered by the first user; and
posting the first media content.

In the second aspect, embodiments of the present disclosure provide a embodiments of the present disclosure provide a media content generation method applied to a client of a second use, and the method includes:
presenting a preset media content stream in a media content presentation page; and
presenting a first media content posted by a first user in the preset media content stream in the media content presentation page; and
the first media content is generated based on a review content posted by the first user based on the target theme content and the target theme content.

In a third aspect, embodiments of the present disclosure provide a media content generation apparatus applied to a client of a first user, and the media content generation apparatus includes:
a display module configured for displaying an information presentation page associated with a target theme content;
an acquisition module configured for acquiring a review content generated based on the target theme content in response to a preset operation triggered by the first user in the information presentation page;
a generation module configured for generating a first media content based on the review content and the target theme content in response to a sharing operation triggered by the first user; and
a posting module configured for posting the first media content.

In the fourth aspect, embodiments of the present disclosure provide a media content generation apparatus applied to a client of a second user, and the apparatus includes:
a first presentation module configured for presenting a preset media content stream in a media content presentation page; and
a second presentation module configured for presenting a first media content posted by a first user in the preset media content stream in the media content presentation page; and
the first media content is generated based on a review content posted by the first user based on the target theme content and the target theme content.

In a fifth aspect, embodiments of the present disclosure provide an electronic device, the electronic device includes: a processor and a memory;
the memory stores computer execution instructions;
the processor executing computer-executable instructions stored by the memory causes the processor to executes the media content generation method as described in the first aspect and various possible designs of the first aspect or the second aspect and various possible designs of the second aspect.

In a sixth aspect, embodiments of the present disclosure provide a computer-readable storage medium having stored therein computer-executable instructions which, when executed by a processor, implement the media content generation method as described in the first aspect and various possible designs of the first aspect or the second aspect and various possible designs of the second aspect.

In a seventh aspect, embodiments of the present disclosure provide a computer program product including a computer program, and the computer program when executed by a processor implements the media content generation method as described in the first aspect and various possible designs of the first aspect or the second aspect and various possible designs of the second aspect.

In an eighth aspect, embodiments of the present disclosure provide a computer program, and the computer program when executed by a processor implements the media content generation method as described in the first aspect and various possible designs of the first aspect or the second aspect and various possible designs of the second aspect.

The media content generation method and the apparatus, the device, the readable storage medium and the product provided by this embodiment, display an information presentation page associated with a target theme content; acquire a review content generated based on the target theme content in response to a preset operation triggered by the first user in the information presentation page; generate a first media content based on the review content and the target theme content in response to a sharing operation triggered by the first user; and post the first media content.

### BRIEF DESCRIPTION OF THE DRAWINGS

In order to more clearly illustrate the embodiments of the present disclosure or technical solutions in related arts, the drawings used in the description of the embodiments or related arts will be briefly described below, and it is obvious that the drawings in the description below are some embodiments of the present disclosure, and for those skilled in the art, other drawings can be obtained according to the drawings without creative efforts.
Fig. 1 is a schematic flowchart of a media content generation method provided by an embodiment of the disclosure;
Fig. 2 is a schematic diagram of an interface interaction provided by an embodiment of the present disclosure;
Fig. 3 is a schematic diagram of still another interface interaction provided by an embodiment of the present disclosure;
Fig. 4 is a schematic diagram of yet another interface interaction provided by an embodiment of the present disclosure;
Fig. 5 is a schematic diagram of yet another interface interaction provided by an embodiment of the present disclosure;
Fig. 6 is a schematic diagram of yet another interface interaction provided by an embodiment of the present disclosure;
Fig. 7 is a schematic flowchart of a media content generation method provided by another embodiment of the disclosure;
Fig. 8 is a schematic flowchart of a media content generation method provided by an embodiment of the disclosure;
Fig. 9 is a schematic diagram of a display interface provided by an embodiment of the present disclosure;
Fig. 10 is a schematic diagram of an interface interaction provided by an embodiment of the present disclosure;
Fig. 11 is a schematic structural diagram of a media content generation apparatus provided by an embodiment of the present disclosure;
Fig. 12 is a schematic structural diagram of a media content generation apparatus provided by an embodiment of the present disclosure;
Fig. 13 is a schematic structural diagram of an electronic device provided by an embodiment of the present disclosure.

### DETAILED DESCRIPTION

To make the objects, technical solutions and advantages of the embodiments of the present disclosure more apparent, the technical solutions in the embodiments of the present disclosure will be described clearly and completely with reference to the drawings in the embodiments of the present disclosure, and it is obvious that the described embodiments are some, but not all embodiments of the present disclosure. All other embodiments, which can be derived by a person skilled in the art from the embodiments disclosed herein without inventive step, are intended to be within the scope of the present disclosure.

In order to solve the technical problem that an existing interaction mode of the review operation based on theme content is single, the disclosure provides a media content generation method and an apparatus, a device, a readable storage medium and a product.

It should be noted that the media content generation method, the apparatus, the device, the readable storage medium and the product provided by the present disclosure may be applied in any scenario of providing review based on target theme content.

Currently, users are only able to post review based on the target theme content. The review content posted by each user is displayed in the detail page associated with the target theme content. When browsing the review content, other users can perform interactive operations such as liking and commenting on the review content. However, the interaction mode is often single, which results in poor user experience. In addition, generally, the review content needs to be checked on the subject detail page, and the operation of checking the review content is cumbersome.

In order to enrich the interaction mode based on the review content, after the review content posted by the user is acquired, the review content can be shared in response to the sharing operation triggered by the user. Optionally, in response to a sharing operation triggered by the user based on the review content, the media content may be generated based on the review content and the target theme content, and the media content may be posted. Therefore, when other subsequent users view the media content, the viewing of the target theme content can be realized based on the media content.

The system architecture on which the present disclosure is based may include a terminal device and a server. The terminal device may be communicatively coupled to the server. Therefore, the server can acquire the interactive information sent by the terminal device based on the triggering operation of the user, and the interactive information includes a trigger instruction, review content generated by the user and the like. The server can generate and post the first media content based on the interactive information, so that the forwarding operation of the review content is realized. Alternatively, the system architecture on which the present disclosure is based may include a terminal device. Therefore, the terminal equipment can acquire the review content generated by the user based on the target theme content based on the triggering operation of the user, generate the media content based on the review content and the target theme content in response to the sharing operation triggered by the user based on the review content, and post the media content.

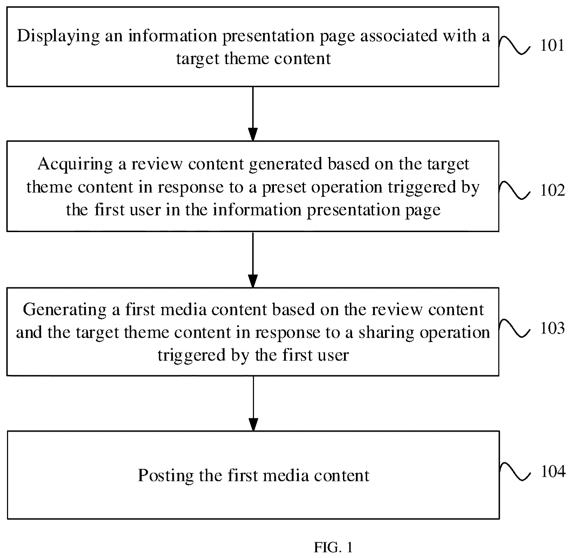

Fig. 1 is a schematic flowchart of a media content generation method provided by an embodiment of the present disclosure, which is applied to a client of a first user, and as shown in Fig. 1, the method includes:
Step 101, displaying an information presentation page associated with a target theme content.

The execution subject of the present embodiment is a media content generation apparatus, which is couplable to a terminal device of the first user.

In this embodiment, the first user may view the target theme content on the internet. The target theme content may include book content, movie content, music content, and the like.

In order to facilitate the first user to view the target theme content, an information presentation page associated with the target theme content may be displayed. The information presentation page may present, for example, related information, review value information, and review content of the target theme content.

For example, the target theme content may be a target book, and book detail pages associated with the target book may be displayed. In the book detail page, the name of the target book, the book cover, the author information, the score information, the contents of reviews historically posted by other users, and the like may be displayed.

Step 102, acquiring a review content generated based on the target theme content in response to a preset operation triggered by the first user in the information presentation page.

In this embodiment, after the information presentation page associated with the target theme content is displayed, the first user may perform a review operation on the target theme content in the information presentation page according to an actual requirement. Therefore, in response to the review operation triggered by the first user in the information presentation page, the review content generated by the first user based on the target theme content is acquired. The review content includes review value content and/or text review content.

In the above example, when the first user views the target book in the information presentation page, the first user may post a book review for the target book. The book review includes the score content and the text review content of the target book by the first user.

As an implementation manner, the review contents historically posted by other users can be presented in the information presentation page. The first user can share the review content posted by other users. In response to the triggering operation of the first user on any review content presented in the information presentation page, the review content currently triggered by the first user can be determined as the review content generated on the basis of the target theme content. The triggering operation includes, but is not limited to, a single click, a double click, a long press, and the like.

Step 103, generating a first media content based on the review content and the target theme content in response to a sharing operation triggered by the first user.

In this embodiment, in order to enrich the interaction mode based on the review content corresponding to the target theme content, the first user may further perform a sharing operation on the review content after generating the review content.

Optionally, in response to a sharing operation triggered by the first user, the first media content is generated based on the associated information of the review content and the target theme content. The first media content may be image media content or video media content including associated information of the review content and the target theme content. Exemplary association information of the target theme content may include a name of the book, a profile, classification information, and the like. Further, the first media content may be associated with the background audio content or the preset background audio content determined by the first user. In some embodiments, the background audio content may include music and/or audio generated based on the review content, such as the audio generated by automatically reading the review content, and so forth.

Optionally, both the review content and/or the target theme content in the first media content are triggerable. After the first media content is posted, in response to the triggering operation of the review content and/or the target theme content in the first media content, jumping to an information presentation page associated with the target theme content can be carried out.

As an implementation manner, when the review content is review content historically posted by other users, a preset sharing control may be displayed in the information presentation page in response to a triggering operation of the first user on the review content. In response to the triggering operation of the first user on the sharing control, the first media content is generated based on the review content and the target theme content which are historically posted by the other users.

Step 104, posting the first media content.

In this embodiment, after the first media content is generated, the first media content may be posted in response to a posting operation triggered by the first user. Optionally, the first user may implement a posting operation on the first media content by a triggering operation on a preset posting control.

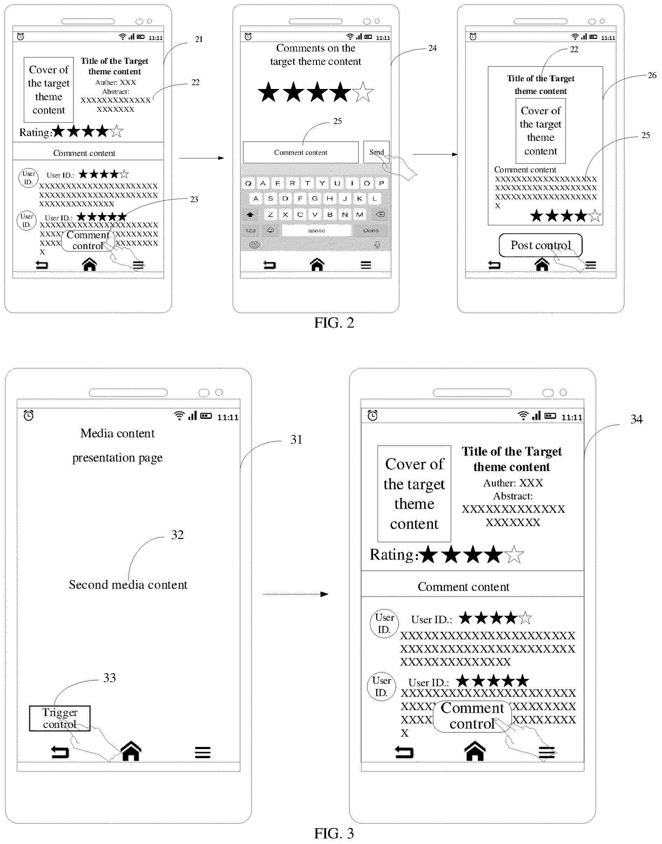

Fig. 2 is a schematic diagram of an interface interaction provided by an embodiment of the present disclosure, and as shown in Fig. 2, an information presentation page 21 associated with target theme content may be displayed on a display interface, and the information presentation page 21 may include associated information 22 of the target theme content and a preset review control 23. In response to the triggering operation of the review control 23 by the first user, a review page 24 may be displayed. In response to the review operation of the first user in the review page 24, the review content 25 generated by the first user based on the target theme content may be acquired. In response to the first user-triggered sharing operation, the first media content 26 may be generated based on the review content 25 and the associated information 22 of the target theme content. The first media content 26 may be posted in response to a posting operation triggered by the first user.

According to the media content generation method provided by the embodiment, the review content generated by the first user based on the target theme content is acquired by responding to the review operation triggered by the first user in the information presentation page associated with the target theme content. Responding to the sharing operation triggered by the first user, the first media content is generated based on the review content and the target theme content, and the first media content is posted. Thereby the sharing operation based on the review content is enabled. The interaction mode of the review operation based on the target theme content is enriched, and the interaction effect is improved.

Optionally, on the basis of any of the foregoing embodiments, step 101 includes:
presenting a second media content associated with the target theme content and a trigger control associated with the target theme content in a media content presentation page;
displaying the information presentation page associated with the target theme content in response to a triggering operation of the first user on the trigger control.

In this embodiment, when the first user browses the media content stream in the media content presentation page, the second media content associated with the target theme content may be presented in the media content presentation page. In addition, a trigger control associated with the target theme content can be presented in the media content presentation page. An information presentation page associated with the target theme content can be displayed in response to the triggering operation of the first user on the trigger control. Therefore, the first user can view the target theme content in the information presentation page.

Fig. 3 is a schematic diagram of still another interface interaction provided by an embodiment of the present disclosure, as shown in Fig. 3, a second media content 32 associated with the target theme content and a trigger control 33 associated with the target theme content may be displayed in a media content presentation page 31. An information presentation page 34 associated with the target theme content may be displayed In response to the triggering operation of the trigger control 33 by the first user.

Optionally, on the basis of any of the foregoing embodiments, step 101 includes:
presenting the second media content associated with the target theme content in the media content presentation page, and displaying a recommendation control associated with the target theme content in a preset display area in the media content presentation page;
displaying a recommendation page associated with the target theme content in response to a triggering operation of the first user on the recommendation control, the recommendation page includes at least one media content associated with the target theme content and the trigger control associated with the target theme content; and
displaying the information presentation page associated with the target theme content in response to the triggering operation of the first user on the trigger control.

In this embodiment, for any target theme content, there may be multiple users who historically post media content based on the target theme content. Therefore, in order to enable the first user to view more media contents associated with the target theme content, when the first user browses the media content stream in the media content presentation page, the second media content associated with the target theme content may be presented in the media content presentation page, and the recommendation control associated with the target theme content may be presented in the preset display area in the media content presentation page. The preset display area may be the bottom of the media content presentation page.

In response to the triggering operation of the first user on the recommendation control, a recommendation page associated with the target theme content can be displayed. At least one media content associated with the target theme content may be displayed in the recommendation page. In addition, a trigger control associated with the target theme content is also included in the recommendation page. An information presentation page associated with the target theme content is displayed in response to the triggering operation of the first user on the trigger control.

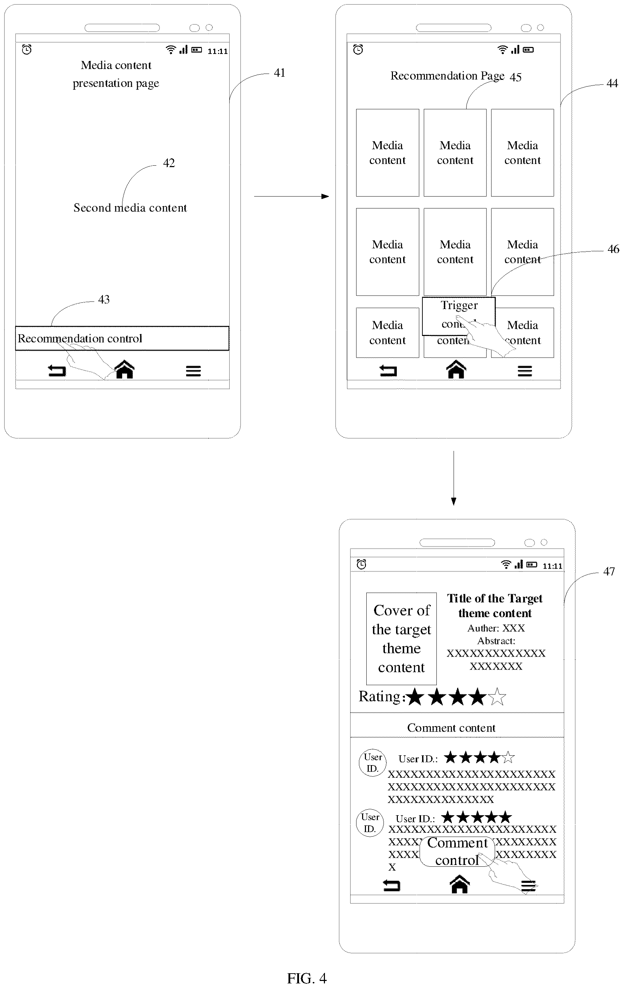

Fig. 4 is a schematic diagram of yet another interface interaction provided by an embodiment of the present disclosure, as shown in Fig. 4, a second media content 42 associated with the target theme content is presented in a media content presentation page 41, and a recommendation control 43 associated with the target theme content is displayed in a preset display area in the media content presentation page 41. In response to the triggering operation by the first user on the recommendation control 43, a recommendation page 44 associated with the target theme content may be displayed, and the recommendation page 44 includes at least one media content 45 associated with the target theme content and a trigger control 46 associated with the target theme content. In response to the triggering operation of the first user on the trigger control 46, an information presentation page 47 associated with the target theme content is displayed.

According to the media content generation method provided by the embodiment, the trigger control associated with the target theme content or the recommending control associated with the target theme content is arranged in the media content presentation page, so that the first user can view the information presentation page through different triggering channels, interaction modes based on the target theme content are enriched, and interaction effects are improved.

Further, on the basis of any of the above embodiments, the information presentation page includes a preset review control.

Step 102 includes:
displaying a preset review page in response to a triggering operation of the first user on the review control; and
acquiring the review content generated by the first user in the review page based on the target theme content.

In this embodiment, the information presentation page further includes a preset review control. When the first user views the target theme content in the information presentation page, the first user can also perform review operation on the target theme content according to actual requirements in the information presentation page.

Optionally, in response to the triggering operation of the review control by the first user, a preset review page may be displayed. In response to a review operation triggered by the first user within the review page, the first user may generate a review content based on the target theme content within the review page.

According to the media content generation method provided by the embodiment, the review control is arranged in the information presentation page, so that the review page can be displayed in response to the triggering operation of the first user on the review control. The first user can quickly realize the generation operation of the review content based on the review page.

Optionally, the review content includes a review value content and/or a text review content.

For example, the review value content may be a score content generated by the first user based on the target theme content, and the text review content may be text content generated by the first user based on the target theme content.

Further, on the basis of any of the above embodiments, step 102 includes:
acquiring review value content generated by the first user based on the target theme content in response to a triggering operation of the first user on a preset review value control in the review page; and/or
acquiring the text review content generated by the first user based on a preset input control in response to a triggering operation of the first user on the input control in the review page.

In this embodiment, the review page may include a review value control and/or an input control. The review value control may include a preset number of review value sub-controls. For example, the review value control may include five stars, and the first user may trigger the review value control according to actual requirements to achieve the generation of the review value content. Input controls include, but is not limited to, text entry boxes and so forth. The first user may generate text review content based on the input control.

Optionally, in response to a triggering operation of the first user on a preset review value control in the review page, the review value content generated by the first user based on the target theme content is acquired. In addition or alternatively, the text review content generated by the first user based on the input control may be acquired in response to the triggering operation of the first user on an input control preset in the review page.

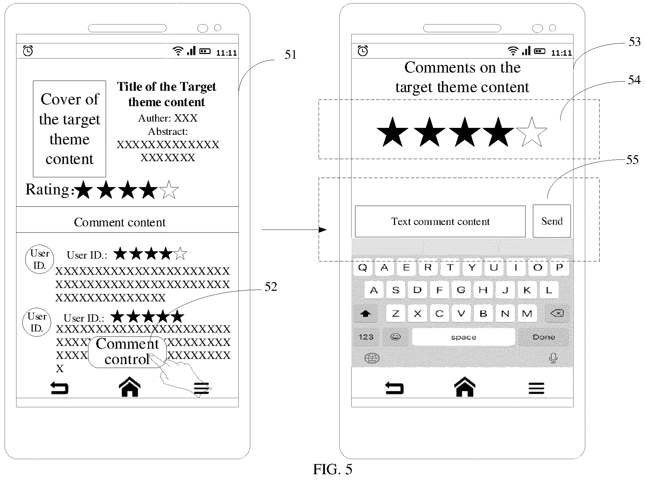

Fig. 5 is a schematic diagram of yet another interface interaction provided by an embodiment of the present disclosure, and as shown in Fig. 5, an information presentation page 51 includes a preset review control 52. In response to a triggering operation of the review control 52 by the first user, a review page 53 may be displayed. The review page 53 includes a review value control 54 and an input control 55. In response to a triggering operation of a user on a review value control 54 preset in the review page 53, the review value content generated by the first user based on the target theme content is acquired. In response to the triggering operation of the first user on the input control 55 preset in the review page 53, the text review content generated by the first user based on the input control is acquired.

According to the media content generation method provided by the embodiment, by arranging the review value control and/or the input control in the review page, the first user can realize the rapid generation of the review value content and/or the text review content based on the review value control and/or the input control, the interaction modes in the review page are enriched, and the interaction effect is improved.

Optionally, the review page further includes a preset sharing control and a post control.

In response to the triggering operation of the first user on the sharing control, the state of the sharing control is switched to a selected state. Thus, after generating the review content, the first user can generate the first media content based on the review content and post the review content to the review area associated with the target theme content. In response to the triggering operation of the first user on a post control preset in the review page, the first media content associated with the target theme content is generated based on the review content.

When the state of the sharing control is the unselected state, the review content can be only posted to the review area associated with the target theme content. In response to the triggering operation of the first user on the post control preset in the review page, the review content is displayed in a review area preset in the information presentation page associated with the target theme content.

Further, on the basis of any of the above embodiments, step 103 includes:
generating the first media content based on the review content, an associated information of the target theme content and material content in response to the sharing operation triggered by the first user, and the material content includes at least one of associated information of a user posting the review content, a display background associated with the target theme content and a preset style template.

In this embodiment, the first media content may include the review content, the associated information of the target theme content, and the material content.

The associated information of the target theme content includes, but is not limited to, the identification of the target theme content, the author information, the cover page, the content introduction, the poster and so on.

The material content may include at least one of associated information of the first user, a display background associated with the target theme content, and a preset style template. The related information of the user posting the review content includes identification information of the user posting the review content, and the identification information can be an avatar identification, a name identification and the like of the user posting the review content.

The display background associated with the target theme content may be a pure color display background, or may be a display background including a preset pattern. In addition, the color of the display background can be determined according to the associated information of the target theme content. For example, the target theme content may be a target book, the cover of the target book may be green, and the color of the display background may be determined to be green which is the same as or similar to the cover of the target book according to the cover color of the target book.

Optionally, in response to a sharing operation triggered by the first user, the first media content is generated according to the review content, the associated information of the target theme content, and the material content. The first user can determine whether to add a display background in the first media content according to actual requirements. The first user may also perform an editing operation on the display background according to actual requirements, for example, edit display parameters such as a display color, a display area, a display time, and a display pattern of the display background.

Optionally, the display background may also be set by the first user in advance according to actual requirements. In response to the sharing operation triggered by the first user, the review media content associated with the target media content is generated according to the preset style template and the related information of the review content and/or the target theme content. First media content is generated based on the review media content and the display context determined by the first user.

In the media content generation method provided by this embodiment, by generating the first media content based on the review content and the target theme content and/or the display background associated with the target theme content in response to the sharing operation triggered by the first user, the display style of the first media content can be enriched.

Optionally, on the basis of any embodiment of the foregoing embodiment, the generating the first media content based on the review content and the target theme content and/or the display background associated with the target theme content in response to the sharing operation triggered by the first user includes:
generating the first media content based on the review content and the associated information of the target theme content and/or the display background associated with the target theme content according to the preset style template in response to the sharing operation triggered by the first user;
the style template includes one or more of a display size, a display position and a display layout corresponding to the review content, the associated information of the target theme content in the first media content and/or the display background associated with the target theme content.

In this embodiment, in order to realize the rapid generation of the first media content, at least one style template may be preset, and the style template includes one or more of a display size, a display position and a display layout corresponding to the review content, the associated information of the target theme content in the first media content and/or the display background associated with the target theme content.

Therefore, when the sharing operation triggered by the first user is acquired, the first media content can be generated based on the review content, the associated information of the target theme content and/or the display background associated with the target theme content according to the preset style template.

According to the media content generation method provided by the embodiment, the style template is preset, so that the first media content can be quickly generated based on the style template in response to the sharing operation triggered by the first user.

Further, on the basis of any of the above embodiments, after the generating the first media content based on the review content and the target theme content and/or the display background associated with the target theme content in response to the sharing operation triggered by the first user, the method further includes:
performing an editing operation on a display parameter and/or a style template corresponding to the review content and the target theme content in the first media content and/or the display background associated with the target theme content in response to an editing operation triggered by the first user based on the first media content.

In this embodiment, the first media content generated based on the preset style template may not meet the personalized requirements of the first user, and therefore, the first user may further perform an editing operation on the first media content generated based on the style template according to actual requirements.

Optionally, the first user may trigger the editing operation by triggering a preset editing control, or the first user may trigger the editing operation by performing a long-time pressing, a double-clicking, a dragging, and other triggering operations on the first media content, which does not limit a triggering manner of the editing operation in the present disclosure.

Further, in response to an editing operation triggered by the first user based on the first media content, the editing operation may be performed on the display parameter and/or the style template corresponding to the review content and the target theme content in the first media content and/or the display background associated with the target theme content.

According to the media content generation method provided by the embodiment, by performing the editing operation on the review content and the target theme content in the first media content and/or the display parameter and/or the style template corresponding to the display background associated with the target theme content in response to the editing operation triggered by the first user based on the first media content, the generated first media content can better conform to the personalized requirement of the first user, and the interaction effect is improved.

Further, on the basis of any one of the above embodiments, the generating the first media content according to the preset style template according to the review content and the associated information of the target theme content and/or the display background associated with the target theme content includes:
generating at least one piece of media content to be selected based on the review content and/or the associated information of the target theme content and/or the display background associated with the target theme content according to at least one preset style template;
determining the first media content based on the candidate media content element selected by the first user in response to a selection operation of the first user on the at least one candidate media content element

In this embodiment, the number of the style templates may be at least one. At least one candidate media content may be generated based on the review content and/or the associated information of the target theme content and/or the display context associated with the target theme content according to the at least one style template.

In order to enable the generated first media content to better conform to the personalized requirements of the first user, the first user may perform a selection operation on a media content element to be selected in at least one media content to be selected according to actual requirements. The media content elements to be selected include all pictures or part of pictures in the first media content. In response to a selection operation triggered by the first user, the first media content may be determined based on the candidate media content element selected by the first user.

In the media content generation method provided by this embodiment, by generating at least one media content to be selected is generated based on the review content and/or the associated information of the target theme content and/or the display background associated with the target theme content according to at least one preset style template, the first media content is determined based on the media content element to be selected which is selected by the first user in response to a selection operation of the first user on at least one media content element to be selected. Therefore, the first user can flexibly select the display content in the first media content according to actual requirements, and the generated first media content is more suitable for the personalized requirements of the first user.

Further, on the basis of any one of the above embodiments, after the generating at least one piece of media content to be selected based on the review content and/or the associated information of the target theme content and/or the display background associated with the target theme content according to at least one preset style template, the method further includes:
displaying the media content to be selected corresponding to any style template in the presentation page; and
switching to display the media contents to be selected corresponding to other style templates in response to a switching operation triggered by the first user.

In this embodiment, the number of the style templates may be at least one. After generating at least one piece of media content to be selected based on the review content and/or the associated information of the target theme content and/or the display background associated with the target theme content according to at least one preset style template, in order to facilitate the selection operation of the first user on the media content to be selected, the media content to be selected corresponding to any style template can be displayed in the presentation page. The media contents to be selected corresponding to other style templates is switched to be displayed in response to a switching operation triggered by the first user. The media content to be selected corresponding to any style template can be displayed in the presentation page in the horizontal direction, and the switching operation can be a switching operation in any horizontal direction. Otherwise, the media content to be selected corresponding to any style template may be displayed in the presentation page in the vertical direction, and the switching operation may be a switching operation in any vertical direction.

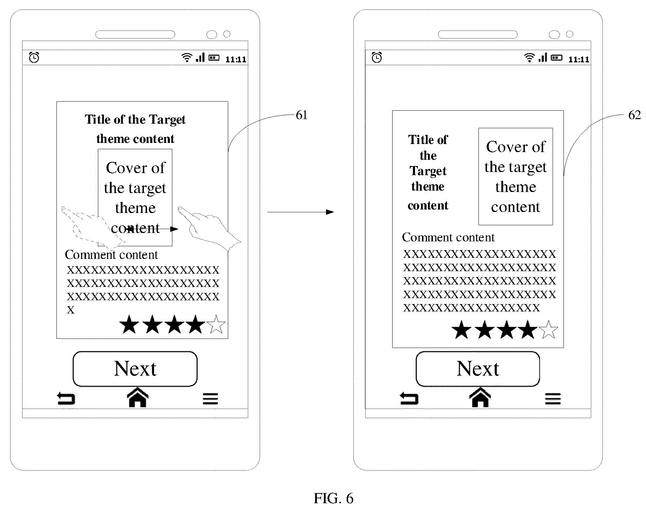

Fig. 6 is a schematic diagram of yet another interface interaction provided by an embodiment of the present disclosure, as shown in Fig. 6, a media content to be selected 61 corresponding to any style template may be displayed in a presentation page, and in response to a switching operation of a first user, the media content to be selected 62 corresponding to other style templates is switched to be displayed.

The media content generation method provided by this embodiment displays the media content to be selected corresponding to any style template in the presentation page. By switching to display the media contents to be selected corresponding to other style templates in response to the switching operation triggered by the first user, the interaction mode based on the media contents to be selected can be enriched, the first user can quickly view different media contents to be selected, and the interaction effect is improved.

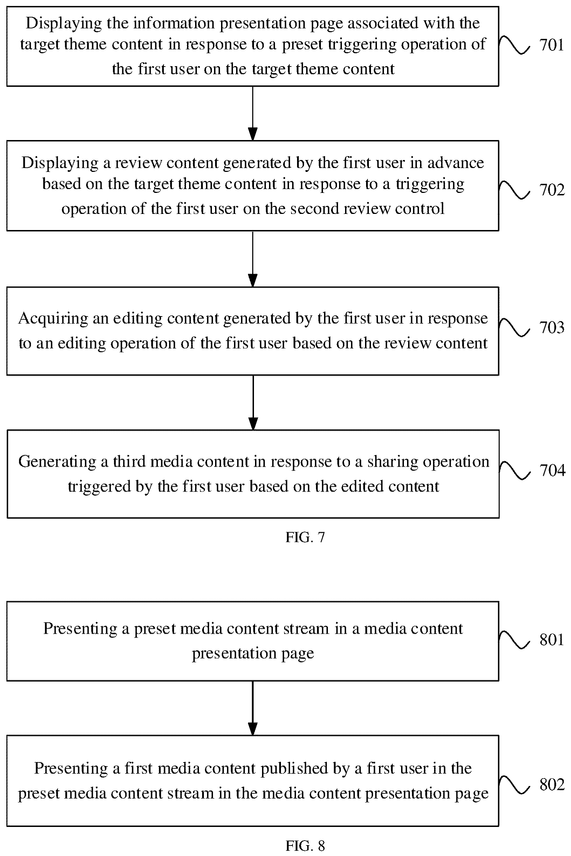

Fig. 7 is a schematic flowchart of a media content generation method provided by another embodiment of the disclosure, and based on any one of the foregoing embodiments, as shown in Fig. 7, after step 104, the method further includes:
Step 701, displaying the information presentation page associated with the target theme content in response to a preset triggering operation of the first user on the target theme content, and the information presentation page includes a preset second review control.
Step 702, displaying a review content generated by the first user in advance based on the target theme content in response to a triggering operation of the first user on the second review control.
Step 703, acquiring an editing content generated by the first user in response to an editing operation of the first user based on the review content.
Step 704, generating a third media content in response to a sharing operation triggered by the first user based on the edited content.

In this embodiment, after the first user generates and posts the first media content based on the review content, the first user may further perform an editing operation on the review content, so as to update the review content. After updating the review content, third media content may also be generated based on the updated review content.

Optionally, after the first user generates and posts the first media content based on the review content, in response to a preset triggering operation of the first user on the target theme content, an information presentation page associated with the target theme content is displayed, and the information presentation page includes a preset second review control. The first user can perform triggering operation on the second review control so as to realize viewing or editing operation on the review content.

In response to the triggering operation of the first user on the second review control, the review content generated by the first user in advance based on the target theme content is displayed. In response to an editing operation by the first user based on the review content, the editing content generated by the first user may be acquired. The first user may implement triggering of the editing operation by performing a triggering operation on a preset editing control, or the first user may implement triggering of the editing operation by performing a long-time pressing, double-clicking, dragging, and the like on the review content, which is not limited by the present disclosure.

Further, after acquiring the editing content generated by the first user based on the review content, the third media content is generated in response to the sharing operation triggered by the first user based on the editing content. The third media content may be generated from the edited content and the target theme content according to any preset style template, or the third media content may be generated from the edited content and the target theme content according to the style template of the first media content.

According to the media content generation method provided by the embodiment, after the posting the first media content, the information presentation page associated with the target theme content is displayed in response to a preset triggering operation of the first user on the target theme content, a review content generated by the first user in advance based on the target theme content is displayed in response to a triggering operation of the first user on the second review control, an editing content generated by the first user is acquired in response to an editing operation of the first user based on the review content, and a third media content is generated in response to a sharing operation triggered by the first user based on the edited content. Therefore, when the review content is updated, the third media content can be quickly generated based on the updated review content, and the interaction mode based on the review content corresponding to the target theme content is further enriched.

Fig. 8 is a schematic flowchart of a media content generation method provided by another embodiment of the disclosure, which is applied to a client of a second user, and as shown in Fig. 8, the method includes:
step 801, presenting a preset media content stream in a media content presentation page.
Step 802, presenting a first media content posted by a first user in the preset media content stream in the media content presentation page.

The first media content is generated based on a review content posted by the first user based on the target theme content and the target theme content.

The execution subject of this embodiment is a media content generation apparatus, which can be coupled to the terminal device of the second user.

The second user may browse the preset stream of media content within the media content presentation page. The preset media content stream may include first media content posted by a first user. Accordingly, the first media content may be presented in the media content presentation page. The first media content is generated according to the review content posted by the first user based on the target theme content.

The first user can post the review content based on the target theme content and trigger the sharing operation based on the review content. In response to the sharing operation, the first media content may be generated and posted based on the review content and the target theme content. After the first user posts the first media content, the second user may browse the first media content in the media content stream.

According to the media content generation method provided by the embodiment, by presenting the first media content posted in the preset media content stream by the first user in the media content presentation page, the second user can view the first media content posted by the first user. The second user is able to view the target theme content based on the first media content.

Further, on the basis of any of the above embodiments, after step 802, the method further includes:
presenting review presentation information generated based on the review content associated with the target theme content and the associated information of the target theme content in a first display area in the media content presentation page; and
presenting a preset display background in a second display area other than the first display area in the media content presentation page.

In this embodiment, the media content presentation page includes a first presentation area, the first presentation area may be located in the central area of the media content presentation page, and the first presentation area corresponds to a preset display size. The area other than the first presentation area in the media content presentation page may be a second presentation area.

In the media content presentation page, the review presentation information generated based on the review content associated with the target theme content and the associated information of the target theme content may be presented in the first presentation area. A preset display background is displayed in the second display area. The color of the display background can be determined according to the cover color of the target theme content, and can also be self-defined by the first user.

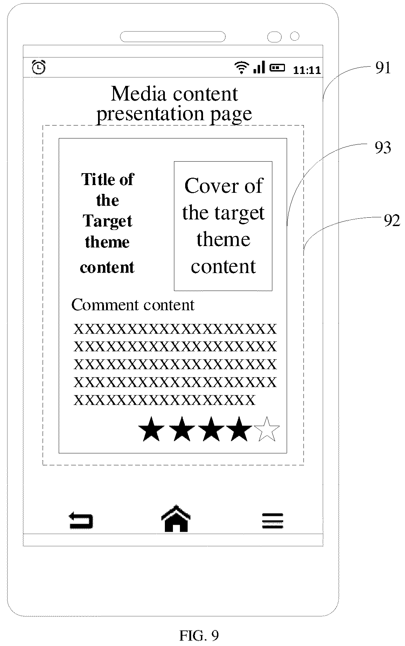

Fig. 9 is a schematic diagram of a display interface provided by an embodiment of the present disclosure, and as shown in Fig. 9, review presentation information 93 generated based on the review content associated with the target theme content and the associated information of the target theme content may be displayed in a first display area 92 in a media content presentation page 91. A preset display background is displayed in a second display area of the media content presentation page 91 other than the first display area 92.

Further, on the basis of any of the above embodiments, after step 802, the method further includes:
displaying the information presentation page associated with the target theme content in response to a triggering operation of the second user on the review presentation information or a triggering operation of the second user on a prompt control associated with the target theme content.

In this embodiment, the first media content may include review presentation information, and the review presentation information is generated according to the review content generated by the first user and the associated information of the target theme content. The first media content may also include a prompt control associated with the target theme content.

Optionally, after the first media content is displayed in the media content presentation page, the second user may view the information presentation page associated with the target theme content by performing a triggering operation on the review presentation information or a triggering operation on the prompt control associated with the target theme content.

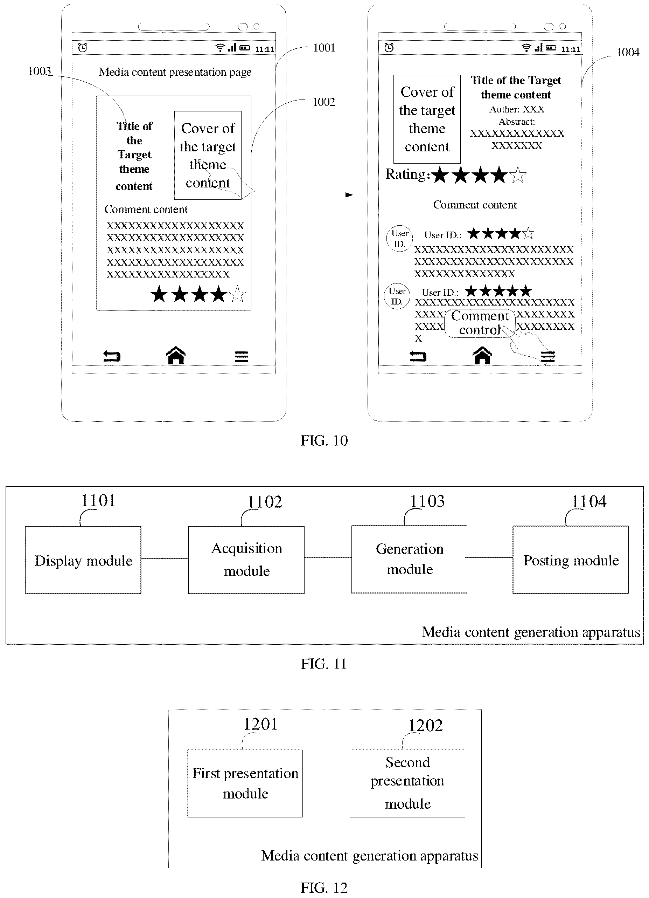

Fig. 10 is a schematic diagram of an interface interaction provided by an embodiment of the present disclosure, and as shown in Fig. 11, a first media content 1002 posted by a first user may be displayed in a media content presentation page 1001, and in response to a triggering operation of a second user on review presentation information 1003 in the first media content 1002, an information presentation page 1004 associated with target theme content may be displayed.

In the media content generation method provided by this embodiment, by responding to the triggering operation of the second user on the review presentation information or the triggering operation of the second user on the prompt control associated with the target theme content, the information presentation page associated with the target theme content is displayed, so that the target theme content can be quickly viewed based on the first media content. The interaction mode in the media content presentation page is enriched.

Further, on the basis of any one of the above embodiments, after the displaying an information presentation page associated with the target theme content in response to a triggering operation of the second user on the review presentation information or a triggering operation of the second user on a prompt control associated with the target theme content, the method further includes:
displaying a review content associated with the first media content at a preset display position in the information presentation page associated with the target theme content; or
highlighting the review content associated with the first media content in the information presentation page associated with the target theme content.

In this embodiment, in order to enable the second user to view the review content associated with the first media content more intuitively in the information presentation page, after the information presentation page associated with the target theme content is displayed according to the triggering operation of the second user based on the first media content, the review content associated with the first media content may be displayed at a preset display position in the information presentation page associated with the target theme content. The preset display position can be the first display position in the review area in the information presentation page.

Optionally, in order to enable the second user to view the review content associated with the first media content more intuitively in the information presentation page, after the information presentation page associated with the target theme content is displayed according to the triggering operation of the second user based on the first media content, the review content associated with the first media content may be highlighted in the information presentation page associated with the target theme content.

According to the media content generation method provided by the embodiment, by displaying a review content associated with the first media content at a preset display position in the information presentation page associated with the target theme content, or highlighting the review content associated with the first media content in the information presentation page associated with the target theme content, the second user can view the review content associated with the first media content more intuitively in the information presentation page, and the interaction effect is improved.

Further, on the basis of any one of the above embodiments, after the displaying an information presentation page associated with the target theme content in response to a triggering operation of the second user on the review presentation information or a triggering operation of the second user on a prompt control associated with the target theme content, the method further includes:
acquiring a current review content associated with the target theme content posted by the first user in the information presentation page; and
if the current review content is detected to be inconsistent with the review content in the first media content, displaying preset prompt information, and presenting the current review content in the information presentation page; and
the prompt information is configured for prompting the second user that the review content in the first media content is updated.

In this embodiment, after the first user posts the first media content, the review content associated with the first media content may be updated according to actual requirements. After the information presentation page associated with the target theme content is displayed according to the triggering operation of the second user based on the first media content, the current review content associated with the target theme content posted by the first user in the information presentation page can be acquired. Whether the current review content is consistent with the review content in the first media content is detected. If the current review content is consistent with the review content in the first media content, it represents that the review content in the first media content is not updated, otherwise, it represents that the first user performs updating operation on the review content associated with the first media content.

In order to enable the second user to know the review content more intuitively, when the current review content is detected to be inconsistent with the review content in the first media content, the preset prompt information can be displayed, and the current review content is displayed in the information presentation page. The prompt information is configured for prompting the second user that the review content in the first media content is updated.

The media content generation method provided by this embodiment, by acquiring a current review content associated with the target theme content posted by the first user in the information presentation page, and if the current review content is detected to be inconsistent with the review content in the first media content, displaying preset prompt information, and presenting the current review content in the information presentation page, the second user can view the latest review content in the information presentation page.

Further, on the basis of any of the above embodiments, after step 802, the method further includes:
suspending presentation of the first media content in response to a triggering operation of the second user on the display background.

In this embodiment, the first media content may include a review presentation information part and a display background part. In order to enrich the interaction mode in the media content presentation page, different interaction effects can be displayed with respect to the triggering operation of the second user on different parts.

Optionally, in response to the triggering operation of the second user on the review presentation information part, an information presentation page associated with the target theme content may be displayed. The presentation of the first media content may be suspended in response to the triggering operation of the display background by the second user.

In the media content generation method provided by this embodiment, by suspending the presentation of the first media content in response to the triggering operation of the second user on the display background, the interaction mode in the media content presentation page can be further enriched. The content displayed in the media content presentation page is more suitable for the personalized requirements of the second user.

Fig. 11 is a schematic structural diagram of a media content generation apparatus provided by an embodiment of the present disclosure and applied to a client of a first user, and as shown in Fig. 11, the apparatus includes: a display module 1101, an acquisition module 1102, a generation module 1103, and a posting module 1104. The display module 1101 is configured for displaying an information presentation page associated with a target theme content. The acquisition module 1102 is configured for displaying an information presentation page associated with a target theme content. The generation module 1103 is configured for generating a first media content based on the review content and the target theme content in response to a sharing operation triggered by the first user. The posting module 1104 is configured for posting the first media content.

Further, based on any of the above embodiments, the display module is configured for: presenting a second media content associated with the target theme content and a trigger control associated with the target theme content in a media content presentation page; and displaying an information presentation page associated with the target theme content in response to a triggering operation of the first user on the trigger control. Alternatively, the display module is configured for: presenting the second media content associated with the target theme content in the media content presentation page, and displaying a recommendation control associated with the target theme content in a preset display area in the media content presentation page; displaying a recommendation page associated with the target theme content in response to a triggering operation of the first user on the recommendation control, and the recommendation page includes at least one media content associated with the target theme content and the trigger control associated with the target theme content; and displaying the information presentation page associated with the target theme content in response to the triggering operation of the first user on the trigger control.

Further, based on any of the above embodiments, the information presentation page includes a preset review control. The acquisition module is configured for: displaying a preset review page in response to a triggering operation of the first user on the review control; and acquiring the review content generated by the first user in the review page based on the target theme content.

Further, based on any of the above embodiments, the review content includes a review value content and/or a text review content.

Further, based on any of the above embodiments, the acquisition module is configured for: acquiring review value content generated by the first user based on the target theme content in response to a triggering operation of the first user on a preset review value control in the review page; and/or acquiring the text review content generated by the first user based on a preset input control in response to a triggering operation of the first user on the input control in the review page.

Further, based on any of the above embodiments, the generation module is configured for: generating the first media content based on the review content, an associated information of the target theme content and material content in response to the sharing operation triggered by the first user, and the material content includes at least one of associated information of a user posting the review content, a display background associated with the target theme content and a preset style template.

Further, based on any of the above embodiments, the generation module is configured for: generating the first media content based on the review content and the associated information of the target theme content and/or the display background associated with the target theme content according to the preset style template in response to the sharing operation triggered by the first user. The style template includes one or more of a display size, a display position and a display layout corresponding to the review content, the associated information of the target theme content in the first media content and/or the display background associated with the target theme content.

Further, based on any of the above embodiments, the apparatus further includes a editing module, configured for: performing an editing operation on a display parameter and/or a style template corresponding to the review content and the target theme content in the first media content and/or the display background associated with the target theme content in response to an editing operation triggered by the first user based on the first media content.

Further, based on any of the above embodiments, the generation module is configured for: generating at least one piece of media content to be selected based on the review content and/or the associated information of the target theme content and/or the display background associated with the target theme content according to at least one preset style template; and determining the first media content based on the candidate media content element selected by the first user in response to a selection operation of the first user on the at least one candidate media content element.

Further, based on any of the above embodiments, the apparatus further includes a display module, configured for displaying the media content to be selected corresponding to any style template in the presentation page; and a switching module configured for switching to display the media contents to be selected corresponding to other style templates in response to a switching operation triggered by the first user.

Further, based on any of the above embodiments, the apparatus further includes a display module, configured for displaying the information presentation page associated with the target theme content in response to a preset triggering operation of the first user on the target theme content, and the information presentation page includes a preset second review control; the display module further configured for displaying a review content generated by the first user in advance based on the target theme content in response to a triggering operation of the first user on the second review control; an acquisition module configured for acquiring an editing content generated by the first user in response to an editing operation of the first user based on the review content; and a generation module configured for generating a third media content in response to a sharing operation triggered by the first user based on the edited content.

Further, based on any of the above embodiments, the target theme content includes at least one of book content, a movie content or a music content.

Fig. 12 is a schematic structural diagram of a media content generation apparatus provided by an embodiment of the present disclosure and applied to a client of a second user, and as shown in Fig. 12, the apparatus includes: a first presentation module 1201 and a second presentation module 1202, the first presentation module 1201 is configured for presenting a preset media content stream in a media content presentation page; and second presentation module 1202 is configured for presenting a first media content posted by a first user in the preset media content stream in the media content presentation page. The first media content is generated based on a review content posted by the first user based on the target theme content and the target theme content.

Further, based on any of the above embodiments, the second presentation module is configured for presenting review presentation information generated based on the review content associated with the target theme content and the associated information of the target theme content in a first display area in the media content presentation page; and presenting a preset display background in a second display area other than the first display area in the media content presentation page.

Further, based on any of the above embodiments, the apparatus further includes a processing module, configured for displaying an information presentation page associated with the target theme content in response to a triggering operation of the second user on the review presentation information or a triggering operation of the second user on a prompt control associated with the target theme content.

Further, based on any of the above embodiments, the apparatus further includes a processing module, configured for displaying a review content associated with the first media content at a preset display position in the information presentation page associated with the target theme content; or a processing module configured for highlighting the review content associated with the first media content in the information presentation page associated with the target theme content.

Further, based on any of the above embodiments, the apparatus further includes a content acquisition module, configured for acquiring a current review content associated with the target theme content posted by the first user in the information presentation page; and a processing module configured for, if the current review content is detected to be inconsistent with the review content in the first media content, displaying preset prompt information, and presenting the current review content in the information presentation page. The prompt information is configured for prompting the second user that the review content in the first media content is updated.

Further, based on any of the above embodiments, the apparatus further includes a suspending module, configured for suspending presentation the first media content in response to a triggering operation of the second user on the display background.

The apparatus provided in this embodiment can be used to implement the technical solution of the above method embodiment, and its implementation principle and technical effect are similar, so the details of this embodiment are not repeated here.

In order to realize the above embodiment, the embodiment of the present disclosure also provides an electronic device including a processor and a memory.

The memory stores computer execution instructions;
The processor executes computer-executable instructions stored by the memory causes the processor to perform the media content generation method of any of the above embodiments.

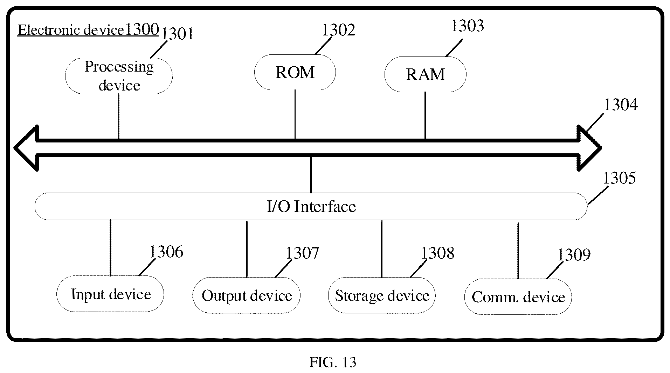

Fig. 13 is a schematic structural diagram of an electronic device provided by an embodiment of the present disclosure, and as shown in Fig. 13, the electronic device 1300 can be a terminal device or a server. The terminal device can include, but is not limited to, a mobile terminal such as a mobile phone, a notebook computer, a digital broadcast receiver, a PDA (personal digital assistant), a PAD (tablet computer), a PMP (portable multimedia player), a vehicle terminal (e.g., a car navigation terminal), and the like, and a fixed terminal such as a digital TV, a desktop computer, and the like. The electronic device shown in Fig. 13 is only an example, and should not bring any limitation to the functions and the scope of use of the embodiments of the present disclosure.

As shown in Fig. 13, the electronic device 1300 can include a processing device (e.g., central processing unit, graphics processor, etc.) 1301 that can perform various appropriate actions and processes in accordance with a program stored in a read-only memory (ROM) 1302 or a program loaded from a storage device 1308 into a random access memory (RAM) 1303. In the RAM 1303, various programs and data necessary for the operation of the electronic device 1300 are also stored. The processing device 1301, the ROM 1302, and the RAM 1303 are connected to each other through a bus 1304. An input/output (I/O) interface 1305 is also connected to bus 1304.

Generally, the following devices can be connected to the I/O interface 1305: input device 1306 including, for example, a touch screen, a touch pad, a keyboard, mouse, a camera, a microphone, accelerometer, gyroscope and the like; an output device 1307 including, for example, a Liquid Crystal Display (LCD), a speaker, a vibrator, and the like; a storage device 1308 including, for example, magnetic tape, hard disk and the like; and a communication device (Comm. device) 1309. The communication device 1309 can allow the electronic device 1300 to communicate with other devices, either wirelessly or by wire, to exchange data. While Fig. 13 illustrates an electronic device 1300 having various devices, it is to be understood that not all illustrated means are required to be implemented or provided. More or fewer devices can be alternatively implemented or provided.

In particular, the processes described above with reference to the flow diagrams can be implemented as computer software programs, according to embodiments of the present disclosure. For example, embodiments of the present disclosure include a computer program product including a computer program carried on a non-transitory computer readable medium, the computer program containing program code for performing the method illustrated by the flow chart. In such an embodiment, the computer program can be downloaded and installed from a network via the communication device 1309, or installed from the storage device 1308, or installed from the ROM 1302. The computer program, when executed by the processing device 1301, performs the above-described functions defined in the methods of the embodiments of the present disclosure.

It should be noted that the computer readable medium of the present disclosure can be a computer readable signal medium or a computer readable storage medium or any combination of the two. A computer readable storage medium can be, for example, but not limited to, an electronic, magnetic, optical, electromagnetic, infrared, or semiconductor system, apparatus, or device, or any combination of the foregoing. More specific examples of the computer readable storage medium can include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium can be any tangible medium that can contain, or store a program for use by or in connection with an instruction execution system, apparatus, or device. In contrast, in the present disclosure, a computer readable signal medium can include a propagated data signal with computer readable program code embodied therein, for example, in baseband or as part of a carrier wave. Such a propagated data signal can take any of a variety of forms, including, but not limited to, electro-magnetic, optical, or any suitable combination thereof. A computer readable signal medium can be any computer readable medium that is not a computer readable storage medium and that can communicate, propagate, or transport a program for use by or in connection with an instruction execution system, apparatus, or device. Program code embodied on a computer readable medium can be transmitted using any appropriate medium, including but not limited to: electrical wires, optical cables, radio frequency (RF) and so forth, or any suitable combination of the foregoing.

In order to realize the above embodiments, the embodiment of the present disclosure also provides a computer-readable storage medium, on which a computer program is stored which, when being executed by a processor, carries out the management method for navigation tree view according to any of the above examples.

In order to realize the above embodiments, the embodiment of the present disclosure also provides a computer program product, including a computer program, which, when executed by a processor, carries out the management method for navigation tree view according to any of the above examples.

The computer readable medium can be embodied in the electronic device or can be separate and not incorporated into the electronic device.

The computer readable medium carries one or more programs which, when executed by the electronic device, cause the electronic device to carries out the management method for navigation tree view according to any of the above examples.

Computer program code for carrying out operations for aspects of the present disclosure can be written in any combination of one or more programming languages, including but not limited to an object oriented programming language such as Java, Smalltalk, C++, including conventional procedural programming languages, such as the "C" programming language or similar programming languages. The program code can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a Local Area Network (LAN) or a Wide Area Network (WAN), or the connection can be made to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams can represent a module, a segment of program, or a portion of code, which includes one or more executable instructions for implementing the specified logical function. It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units described in the embodiments of the present disclosure can be implemented by software or hardware. The name of a unit does not in some cases constitute a limitation of the unit itself. For example, the first acquisition unit can also be described as "the unit for acquiring at least two internet protocol addresses".

The functions described herein above can be performed, at least in part, by one or more hardware logic components. For example, without limitation, exemplary types of hardware logic components that can be used include: field Programmable Gate Arrays (FPGA), Application Specific Integrated Circuits (ASIC), Application Specific Standard Products (ASSP), system on a chip (SOC), Complex Programmable Logic Devices (CPLD), and the like.

In the context of this disclosure, a machine-readable medium can be a tangible medium that can contain, or store a program for use by or in connection with an instruction execution system, apparatus, or device. The machine-readable medium can be a machine-readable signal medium or a machine-readable storage medium. A machine-readable medium can include, but is not limited to, an electronic, magnetic, optical, electromagnetic, infrared, or semiconductor system, apparatus, or device, or any suitable combination of the foregoing. More specific examples of a machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

In a first aspect, according to one or more embodiments of the present disclosure, a media content generation method applied to a client of a first user is provided, the method includes:
displaying an information presentation page associated with a target theme content;
acquiring a review content generated based on the target theme content in response to a preset operation triggered by the first user in the information presentation page;
generating a first media content based on the review content and the target theme content in response to a sharing operation triggered by the first user; and
posting the first media content.

According to one or more embodiments of the present disclosure, the displaying an information presentation page associated with a target theme content includes:
presenting a second media content associated with the target theme content and a trigger control associated with the target theme content in a media content presentation page;
displaying an information presentation page associated with the target theme content in response to a triggering operation of the first user on the trigger control;
   or,
the displaying an information presentation page associated with a target theme content includes:
   presenting the second media content associated with the target theme content in the media content presentation page, and displaying a recommendation control associated with the target theme content in a preset display area in the media content presentation page;
   displaying a recommendation page associated with the target theme content in response to a triggering operation of the first user on the recommendation control, and the recommendation page includes at least one media content associated with the target theme content and the trigger control associated with the target theme content; and
   displaying the information presentation page associated with the target theme content in response to the triggering operation of the first user on the trigger control.

According to one or more embodiments of the present disclosure, the information presentation page includes a preset review control;
the acquiring a review content generated based on the target theme content in response to a preset operation triggered by the first user in the information presentation page includes:
displaying a preset review page in response to a triggering operation of the first user on the review control; and
acquiring the review content generated by the first user in the review page based on the target theme content.

According to one or more embodiments of the present disclosure, the review content includes a review value content and/or a text review content.

According to one or more embodiments of the present disclosure, the acquiring the review content generated by the first user in the review page based on the target theme content includes:
acquiring review value content generated by the first user based on the target theme content in response to a triggering operation of the first user on a preset review value control in the review page; and/or
acquiring the text review content generated by the first user based on a preset input control in response to a triggering operation of the first user on the input control in the review page.

According to one or more embodiments of the present disclosure, the generating a first media content based on the review content and the target theme content in response to a sharing operation triggered by the first user includes:
generating the first media content based on the review content, an associated information of the target theme content and material content in response to the sharing operation triggered by the first user, and the material content includes at least one of associated information of a user posting the review content, a display background associated with the target theme content and a preset style template.

According to one or more embodiments of the present disclosure, the generating the first media content based on the review content and the target theme content and/or the display background associated with the target theme content in response to the sharing operation triggered by the first user includes:
generating the first media content based on the review content and the associated information of the target theme content and/or the display background associated with the target theme content according to the preset style template in response to the sharing operation triggered by the first user; and
the style template includes one or more of a display size, a display position and a display layout corresponding to the review content, the associated information of the target theme content in the first media content and/or the display background associated with the target theme content.

According to one or more embodiments of the present disclosure, after the generating the first media content based on the review content and the target theme content and/or the display background associated with the target theme content in response to the sharing operation triggered by the first user, the method further includes:
performing an editing operation on a display parameter and/or a style template corresponding to the review content and the target theme content in the first media content and/or the display background associated with the target theme content in response to an editing operation triggered by the first user based on the first media content.

According to one or more embodiments of the present disclosure, the generating the first media content based on the review content and the associated information of the target theme content and/or the display background associated with the target theme content according to the preset style template in response to the sharing operation triggered by the first user includes:
generating at least one piece of media content to be selected based on the review content and/or the associated information of the target theme content and/or the display background associated with the target theme content according to at least one preset style template;
determining the first media content based on the candidate media content element selected by the first user in response to a selection operation of the first user on the at least one candidate media content element.

According to one or more embodiments of the present disclosure, after the generating at least one piece of media content to be selected based on the review content and/or the associated information of the target theme content and/or the display background associated with the target theme content according to at least one preset style template, the method further includes:
displaying the media content to be selected corresponding to any style template in the presentation page; and
switching to display the media contents to be selected corresponding to other style templates in response to a switching operation triggered by the first user.

According to one or more embodiments of the present disclosure, after the posting the first media content, the method further includes:
displaying the information presentation page associated with the target theme content in response to a preset triggering operation of the first user on the target theme content, and the information presentation page includes a preset second review control;
displaying a review content generated by the first user in advance based on the target theme content in response to a triggering operation of the first user on the second review control;
acquiring an editing content generated by the first user in response to an editing operation of the first user based on the review content; and
generating a third media content in response to a sharing operation triggered by the first user based on the edited content.

According to one or more embodiments of the present disclosure, and the target theme content includes at least one of book content, a movie content or a music content.

In the second aspect, according to one or more embodiments of the present disclosure, a media content generation method applied to a client of a second user is provided, and the method includes:
presenting a preset media content stream in a media content presentation page; and
presenting a first media content posted by a first user in the preset media content stream in the media content presentation page; and
the first media content is generated based on a review content posted by the first user based on the target theme content and the target theme content.

According to one or more embodiments of the present disclosure, the presenting a first media content posted by a first user in the preset media content stream in the media content presentation page includes:
presenting review presentation information generated based on the review content associated with the target theme content and the associated information of the target theme content in a first display area in the media content presentation page; and
presenting a preset display background in a second display area other than the first display area in the media content presentation page.

According to one or more embodiments of the present disclosure, after the presenting a first media content posted by a first user in the preset media content stream in the media content presentation page, the method further includes:
displaying an information presentation page associated with the target theme content in response to a triggering operation of the second user on the review presentation information or a triggering operation of the second user on a prompt control associated with the target theme content.

According to one or more embodiments of the present disclosure, after the displaying an information presentation page associated with the target theme content in response to a triggering operation of the second user on the review presentation information or a triggering operation of the second user on a prompt control associated with the target theme content, the method further includes:
displaying a review content associated with the first media content at a preset display position in the information presentation page associated with the target theme content;
   or,
highlighting the review content associated with the first media content in the information presentation page associated with the target theme content.

According to one or more embodiments of the present disclosure, after the displaying an information presentation page associated with the target theme content in response to a triggering operation of the second user on the review presentation information or a triggering operation of the second user on a prompt control associated with the target theme content, the method further includes:
acquiring a current review content associated with the target theme content posted by the first user in the information presentation page; and
if the current review content is detected to be inconsistent with the review content in the first media content, displaying preset prompt information, and presenting the current review content in the information presentation page; and
the prompt information is configured for prompting the second user that the review content in the first media content is updated.

According to one or more embodiments of the present disclosure, after the presenting a first media content posted by a first user in the preset media content stream in the media content presentation page, the method further includes:
suspending presentation the first media content in response to a triggering operation of the second user on the display background.

In a third aspect, according to one or more embodiments of the present disclosure, a media content generation apparatus applied to a client of a first user is provided, and the media content generation apparatus includes:
a display module configured for displaying an information presentation page associated with a target theme content;
an acquisition module configured for acquiring a review content generated based on the target theme content in response to a preset operation triggered by the first user in the information presentation page;
a generation module configured for generating a first media content based on the review content and the target theme content in response to a sharing operation triggered by the first user; and
a posting module configured for posting the first media content.

According to one or more embodiments of the present disclosure, the display module is configured for:
presenting a second media content associated with the target theme content and a trigger control associated with the target theme content in a media content presentation page;
displaying an information presentation page associated with the target theme content in response to a triggering operation of the first user on the trigger control;
or, the display module is configured for:
   the displaying an information presentation page associated with a target theme content includes:
   presenting the second media content associated with the target theme content in the media content presentation page, and displaying a recommendation control associated with the target theme content in a preset display area in the media content presentation page;
   displaying a recommendation page associated with the target theme content in response to a triggering operation of the first user on the recommendation control, and the recommendation page includes at least one media content associated with the target theme content and the trigger control associated with the target theme content; and
   displaying the information presentation page associated with the target theme content in response to the triggering operation of the first user on the trigger control.

According to one or more embodiments of the present disclosure, the information presentation page includes a preset review control; and
the acquisition module is configured for:
displaying a preset review page in response to a triggering operation of the first user on the review control; and
acquiring the review content generated by the first user in the review page based on the target theme content.

According to one or more embodiments of the present disclosure, the review content includes a review value content and/or a text review content.

According to one or more embodiments of the present disclosure, the acquisition module is configured for:
acquiring review value content generated by the first user based on the target theme content in response to a triggering operation of the first user on a preset review value control in the review page; and/or
acquiring the text review content generated by the first user based on a preset input control in response to a triggering operation of the first user on the input control in the review page.

According to one or more embodiments of the present disclosure, the generation module is configured for:
generating the first media content based on the review content, an associated information of the target theme content and material content in response to the sharing operation triggered by the first user, and the material content includes at least one of associated information of a user posting the review content, a display background associated with the target theme content and a preset style template.

According to one or more embodiments of the present disclosure, the generation module is configured for:
generating the first media content based on the review content and the associated information of the target theme content and/or the display background associated with the target theme content according to the preset style template in response to the sharing operation triggered by the first user; and
the style template includes one or more of a display size, a display position and a display layout corresponding to the review content, the associated information of the target theme content in the first media content and/or the display background associated with the target theme content.

According to one or more embodiments of the present disclosure, the apparatus further includes a editing module, configured for:
performing an editing operation on a display parameter and/or a style template corresponding to the review content and the target theme content in the first media content and/or the display background associated with the target theme content in response to an editing operation triggered by the first user based on the first media content.

According to one or more embodiments of the present disclosure, the generation module is configured for:
generating at least one piece of media content to be selected based on the review content and/or the associated information of the target theme content and/or the display background associated with the target theme content according to at least one preset style template;
determining the first media content based on the candidate media content element selected by the first user in response to a selection operation of the first user on the at least one candidate media content element.

According to one or more embodiments of the present disclosure, the apparatus further includes:
a display module, configured for displaying the media content to be selected corresponding to any style template in the presentation page; and
a switching module configured for switching to display the media contents to be selected corresponding to other style templates in response to a switching operation triggered by the first user.

According to one or more embodiments of the present disclosure, the apparatus further includes a display module configured for:
a display module, configured for displaying the information presentation page associated with the target theme content in response to a preset triggering operation of the first user on the target theme content, and the information presentation page includes a preset second review control;
a display module configured for displaying a review content generated by the first user in advance based on the target theme content in response to a triggering operation of the first user on the second review control;
an acquisition module configured for acquiring an editing content generated by the first user in response to an editing operation of the first user based on the review content; and
a generation module configured for generating a third media content in response to a sharing operation triggered by the first user based on the edited content.

According to one or more embodiments of the present disclosure, and the target theme content includes at least one of book content, a movie content or a music content.

In the fourth aspect, according to one or more embodiments of the present disclosure, a media content generation apparatus applied to a client of a second user is provided, and the apparatus includes:
a first presentation module configured for presenting a preset media content stream in a media content presentation page; and
a second presentation module configured for presenting a first media content posted by a first user in the preset media content stream in the media content presentation page; and
the first media content is generated based on a review content posted by the first user based on the target theme content and the target theme content.

According to one or more embodiments of the present disclosure, the second presentation module is configured for:
presenting review presentation information generated based on the review content associated with the target theme content and the associated information of the target theme content in a first display area in the media content presentation page; and
presenting a preset display background in a second display area other than the first display area in the media content presentation page.

According to one or more embodiments of the present disclosure, the apparatus further includes a processing module, configured for the apparatus further includes:
a processing module, configured for displaying an information presentation page associated with the target theme content in response to a triggering operation of the second user on the review presentation information or a triggering operation of the second user on a prompt control associated with the target theme content.

According to one or more embodiments of the present disclosure, the apparatus further includes:
a processing module, configured for displaying a review content associated with the first media content at a preset display position in the information presentation page associated with the target theme content;
   or,
a processing module, configured for highlighting the review content associated with the first media content in the information presentation page associated with the target theme content.

According to one or more embodiments of the present disclosure, the apparatus further includes:
a content acquisition module, configured for acquiring a current review content associated with the target theme content posted by the first user in the information presentation page; and
a processing module configured for, if the current review content is detected to be inconsistent with the review content in the first media content, displaying preset prompt information, and presenting the current review content in the information presentation page; and
the prompt information is configured for prompting the second user that the review content in the first media content is updated.

According to one or more embodiments of the present disclosure, the apparatus further includes:
a suspending module, configured for suspending presentation the first media content in response to a triggering operation of the second user on the display background.

In a fifth aspect, according to one or more embodiments of the present disclosure, an electronic device is provided, the electronic device includes: a processor and a memory;
the memory stores computer execution instructions;
the processor executing computer-executable instructions stored by the memory causes the processor to executes the media content generation method as described in the first aspect and various possible designs of the first aspect or the second aspect and various possible designs of the second aspect.

In a sixth aspect, according to one or more embodiments of the present disclosure, a computer-readable storage medium having stored therein computer-executable instructions is provided and when executed by a processor, implement the media content generation method as described in the first aspect and various possible designs of the first aspect or the second aspect and various possible designs of the second aspect.

In a seventh aspect, according to one or more embodiments of the present disclosure, a computer program product including a computer program is provided and the computer program when executed by a processor implements the media content generation method as described in the first aspect and various possible designs of the first aspect or the second aspect and various possible designs of the second aspect.

The above description is only the preferred embodiment of the present disclosure and the explanation of the applied technical principles. It should be understood by those skilled in the art that the disclosure scope involved in this disclosure is not limited to the technical scheme formed by the specific combination of the above technical features, but also covers other technical schemes formed by any combination of the above technical features or their equivalent features without departing from the above disclosure concept. For example, the above features are replaced with (but not limited to) technical features with similar functions disclosed in this disclosure.

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. A media content generation method applied to a client of a first user, comprising:
displaying an information presentation page associated with a target theme content;
acquiring a review content generated based on the target theme content in response to a preset operation triggered by the first user in the information presentation page;
generating a first media content based on the review content and the target theme content in response to a sharing operation triggered by the first user; and
posting the first media content.

2. The method of claim 1, wherein the displaying an information presentation page associated with a target theme content comprises:
presenting a second media content associated with the target theme content and a trigger control associated with the target theme content in a media content presentation page;
displaying the information presentation page associated with the target theme content in response to a triggering operation of the first user on the trigger control;
or,
the displaying an information presentation page associated with a target theme content comprises:
presenting the second media content associated with the target theme content in the media content presentation page, and displaying a recommendation control associated with the target theme content in a preset display area in the media content presentation page;
displaying a recommendation page associated with the target theme content in response to a triggering operation of the first user on the recommendation control, wherein the recommendation page comprises at least one media content associated with the target theme content and the trigger control associated with the target theme content; and
displaying the information presentation page associated with the target theme content in response to the triggering operation of the first user on the trigger control.

3. The method of claim 1 or 2, wherein the information presentation page comprises a preset review control;
the acquiring a review content generated based on the target theme content in response to a preset operation triggered by the first user in the information presentation page comprises:
displaying a preset review page in response to a triggering operation of the first user on the review control; and
acquiring the review content generated by the first user in the review page based on the target theme content.

4. The method of claim 3, wherein the review content comprises a review value content and/or a text review content.

5. The method of claim 4, wherein the acquiring the review content generated by the first user in the review page based on the target theme content comprises:
acquiring review value content generated by the first user based on the target theme content in response to a triggering operation of the first user on a preset review value control in the review page; and/or
acquiring the text review content generated by the first user based on a preset input control in response to a triggering operation of the first user on the input control in the review page.

6. The method of any of claims 1-5, wherein the generating a first media content based on the review content and the target theme content in response to a sharing operation triggered by the first user comprises:
generating the first media content based on the review content, an associated information of the target theme content and a material content in response to the sharing operation triggered by the first user, wherein the material content comprises at least one of associated information of a user posting the review content, a display background associated with the target theme content and a preset style template.

7. The method of claim 6, wherein the generating the first media content based on the review content and the target theme content and/or the display background associated with the first theme content in response to the sharing operation triggered by the first user comprises:
generating the first media content based on the review content and the associated information of the target theme content and/or the display background associated with the target theme content according to the preset style template in response to the sharing operation triggered by the first user;
wherein the style template comprises one or more of a display size, a display position and a display layout corresponding to the review content, the associated information of the target theme content in the first media content and/or the display background associated with the target theme content.

8. The method of claim 7, wherein after the generating the first media content based on the review content and the target theme content and/or the display background associated with the first subject content in response to the sharing operation triggered by the first user, the method further comprises:
performing an editing operation on a display parameter and/or a style template corresponding to the review content and the target theme content in the first media content and/or the display background associated with the target theme content in response to an editing operation triggered by the first user based on the first media content.

9. The method of claim 7 or 8, wherein the generating the first media content based on the review content and the associated information of the target theme content and/or the display background associated with the target theme content according to the preset style template in response to the sharing operation triggered by the first user comprises:
generating at least one piece of media content to be selected based on the review content and/or the associated information of the target theme content and/or the display background associated with the target theme content according to at least one preset style template;
determining the first media content based on the candidate media content element selected by the first user in response to a selection operation of the first user on the at least one candidate media content element.

10. The method of claim 9, wherein after the generating at least one piece of media content to be selected based on the review content and/or the associated information of the target theme content and/or the display background associated with the target theme content according to at least one preset style template, the method further comprises:
displaying the media content to be selected corresponding to any style template in the presentation page; and
switching to display the media contents to be selected corresponding to other style templates in response to a switching operation triggered by the first user.

11. The method of any of claims 1-10, wherein, after the posting the first media content, the method further comprises:
displaying the information presentation page associated with the target theme content in response to a preset triggering operation of the first user on the target theme content, wherein the information presentation page comprises a preset second review control;
displaying a review content generated by the first user in advance based on the target theme content in response to a triggering operation of the first user on the second review control;
acquiring an editing content generated by the first user in response to an editing operation of the first user based on the review content; and
generating a third media content in response to a sharing operation triggered by the first user based on the edited content.

12. The method of any one of claims 1-11, wherein the target theme content comprises at least one of book content, a movie content or a music content.

13. A media content generation method applied to a client of a second user, wherein the method comprises:
presenting a preset media content stream in a media content presentation page; and
presenting a first media content posted by a first user in the preset media content stream in the media content presentation page;
wherein the first media content is generated based on a review content posted by the first user based on the target theme content and the target theme content.

14. The method of claim 13, wherein the presenting a first media content posted by a first user in the preset media content stream in the media content presentation page comprises:
presenting review presentation information generated based on the review content associated with the target theme content and the associated information of the target theme content in a first display area in the media content presentation page; and
presenting a preset display background in a second display area other than the first display area in the media content presentation page.

15. The method of claim 14, wherein after the presenting a first media content posted by a first user in the preset media content stream in the media content presentation page, the method further comprises:
displaying an information presentation page associated with the target theme content in response to a triggering operation of the second user on the review presentation information or a triggering operation of the second user on a prompt control associated with the target theme content.

16. The method of claim 15, wherein after the displaying an information presentation page associated with the target theme content in response to a triggering operation of the second user on the review presentation information or a triggering operation of the second user on a prompt control associated with the target theme content, the method further comprises:
displaying a review content associated with the first media content at a preset display position in the information presentation page associated with the target theme content;
or,
highlighting the review content associated with the first media content in the information presentation page associated with the target theme content.

17. The method of any of claims 15-16, wherein after the displaying an information presentation page associated with the target theme content in response to a triggering operation of the second user on the review presentation information or a triggering operation of the second user on a prompt control associated with the target theme content, the method further comprises:
acquiring a current review content associated with the target theme content posted by the first user in the information presentation page; and
if the current review content is detected to be inconsistent with the review content in the first media content, displaying preset prompt information, and presenting the current review content in the information presentation page;
wherein the prompt information is configured for prompting the second user that the review content in the first media content is updated.

18. The method of any one of claims 14-17, wherein after the presenting a first media content posted by a first user in the preset media content stream in the media content presentation page, the method further comprises:
suspending presentation the first media content in response to a triggering operation of the second user on the display background.

19. A media content generation apparatus applied to a client of a first user, wherein the media content generation apparatus comprises:
a display module configured for displaying an information presentation page associated with a first theme content;
an acquisition module configured for acquiring a review content generated based on the first theme content in response to a preset operation triggered by the first user in the information presentation page;
a generation module configured for generating a first media content based on the review content and the first theme content in response to a sharing operation triggered by the first user; and
a posting module configured for posting the first media content.

20. A media content generation apparatus applied to a client of a second user, wherein the media content generation apparatus comprises:
a first display module configured for presenting a preset media content stream in a media content presentation page; and
a second display module configured for presenting a first media content posted by a first user in the preset media content stream in the media content presentation page;
wherein the first media content is generated based on a review content posted by the first user based on the first theme content and the first theme content.

21. An electronic device, wherein the electronic device comprises: a processor and a memory;
the memory stores computer execution instructions;
the processor executing computer-executable instructions stored by the memory causes the processor to perform the media content generation method of any of claims 1 to 12 or claims 13 to 18.

22. A computer-readable storage medium having stored therein computer-executable instructions which, when executed by a processor, implement the media content generation method of any one of claims 1 to 12 or claims 13 to 18.

23. A computer program product comprising a computer program, wherein the computer program when executed by a processor implements a method of media content generation of any one of claims 1 to 12 or 13 to 18.

24. A computer program, wherein the computer program when executed by a processor implements a method of media content generation of any one of claims 1 to 12 or 13 to 18.
